# EUROPEAN PATENT APPLICATION

(11) **EP 3 247 177 A1**
(43) Date of publication of application: **22.11.2017**
(21) Application number: 16169780.0
(22) Date of filing: 16.05.2016
(51) Int. Cl.: H05B 37/02

(54) **CONTROL SYSTEM**

(71) Applicant: BrainLit AB, 223 70 Lund (SE)
(72) Inventor: ANDERSSON, Peter K, 26372 Skäret (SE); WINGREN, Tord, 21774 Malmö (SE)
(74) Representative: Awapatent AB

(57) **Abstract**

The present invention relates to a control system (200). The control system (200) comprises a control engine (120); a light sensor (130) arranged in a space (100); one or more light sources (110) arranged in the space; and a database (140) comprising one or more scenes, wherein each scene is represented by a set of parameters comprising a light spectrum having spatial distribution and an intensity having spatial distribution; wherein the control engine is configured to: receive input of a target scene among the one or more scenes; receive illumination data from the light sensor (130), the illumination data pertaining to parameters of a current light profile of the space, the parameters of the current light profile of the space comprises a light spectrum having a spatial distribution and an intensity having spatial distribution; determine a target light setting of the space based on the received illumination data and the set of parameters of the target scene; control the one or more of light sources (110) based on the determined target light setting of the space.

## Description

### Technical field

The present invention relates to a control system. Especially the present invention relates to a control system for controlling light sources.

### Background

Stimuli stimulating senses of humans and/or animals are important for the well being of the human and/or animal exposed to the stimuli. Non-limiting examples of stimuli are light, sound, scent, pressure, taste, temperature.

It has become known that humans and/or animals have different needs when it comes to exposure to stimuli stimulating sense; that is they are affected by stimuli in their environment in different ways and therefore have different needs when it comes to exposure for stimuli. Non-limiting examples of such needs stem from physical conditions (for example eye problems), from mental conditions (for example winter depressions), and from personal preference. Some also stem from task oriented requirements for a specific room.

To illustrate further it is assumed that all sorts of life is depending on stimuli and the quality of stimuli, and that all individuals of species have individual need of stimuli.

There is thus a need for a system and method where different needs are taken into account.

### Summary of the invention

In view of the above, it is an object of the present invention to provide a system and a method where different needs of stimuli are taken into account.

According to a first aspect a control system is provided. The control system comprises: a control engine; a light sensor arranged in a space; one or more light sources arranged in the space; and a database comprising one or more scenes, wherein each scene is represented by a set of parameters comprising a light spectrum having spatial distribution and an intensity having spatial distribution. The control engine is configured to: receive input of a target scene among the one or more scenes; receive illumination data from the light sensor, the illumination data pertaining to parameters of a current light profile of the space, the parameters of the current light profile of the space comprises a light spectrum having a spatial distribution and an intensity having spatial distribution; determine a target light setting of the space based on the received illumination data and the set of parameters of the target scene; and control the one or more of light sources based on the determined target light setting of the space.

The control system provide for new possibilities of representing predetermined scenes in a controlled way. For example an illumination representing an outdoor scene of a beach with bright sand, dark blue water and light blue sky may be recreated indoors in a room having the control system installed. Hence, new possibilities have opened up to represent similar or almost identical indoor light scenes compared with the outdoor lighting scenes. The control system provide for fulfilling different needs of humans and/or different animals with regard to lighting environment. Further, the control system provide for improved lighting accommodating for a human or animal lighting needs, with regards to be able to recreate or rebuild a light scene, using the controllable one or more light sources. By controlling the light sources in accordance with the present invention many positive effects on health, well-being and productivity of humans and/or animals may be achieved.

The light spectrum of each scene may have a temporal distribution.

The light intensity of each scene may have a temporal distribution.

The control engine may further be configured to: continuously update the from the light sensor received illumination data; dynamically determine the target light setting of the space based on the continuously updated illumination data and the set of parameters of the target scene; and dynamically control the one or more light sources based on the dynamically determined target light setting of the space.

The set of parameters representing a scene may be derived from an image or a plurality of images of the scene.

The set of parameters of each scene may further comprise geopositioning data of the scene. The illumination data may comprise geopositioning data of the space.

The control system further comprises a temperature sensor configured to measure a temperature in the space; and a temperature controller configured to control the temperature of the space. The set of parameters of each scene further comprises a temperature. The control engine may further be configured to: receive temperature data from the temperature sensor; determine a target temperature setting of the space based on the received temperature data and the set of parameters of the target scene; and control the temperature controller based on the determined target temperature setting of the space.

The control engine may further be configured to: continuously update the from the temperature sensor received temperature data; dynamically determine the target temperature setting of the space based on the continuously updated temperature data and the set of parameters of the target scene; and dynamically control the temperature controller based on the dynamically determined target temperature setting of the space.

The control system may further comprise an air flow sensor configured to measure an airflow in the space; and an air flow controller configured to control an air flow of the space. The set of parameters of each scene may further comprise an air flow. The control engine may further be configured to receive air flow data from the air flow sensor; determine a target air flow setting of the space based on the received air flow data and the set of parameters of the target scene; and control the air flow controller based on the determined target air flow setting of the space.

The control engine may further be configured to continuously update the from the air flow sensor received air flow data; dynamically determine the target air flow setting of the space based on the continuously updated air flow data and the set of parameters of the target scene; and dynamically control the air flow controller based on the dynamically determined target air flow setting of the space.

The control system may further comprise a loudspeaker configured to emit a sound pattern in the space. The set of parameters of each scene may further comprise a sound pattern. The control engine may further be configured to determine a target sound pattern of the space based on the sound pattern of the target scene; and control the loudspeaker based on the determined target sound pattern of the space.

The sound pattern of each scene may have a temporal distribution. The control engine may further be configured to dynamically determine the target sound pattern of the space based on the sound pattern of the target scene; and dynamically control the loudspeaker based on the dynamically determined target sound pattern of the space.

The control system may further comprise a scenthesizer configured to emit a scent in the space. The set of parameters of each scene may further comprise a scent. The control engine may further be configured to determine a target scent of the space based on the scent of the target scene; and control the scenthesizer based on the determined target scent of the space. In this context a scenthesizer shall be construed as a controllable device configured to emit a scent. The scenthesizer is controllable such that various scents may be emitted depending upon how the scenthesizer is controlled.

The scent of each scene may have a temporal distribution. The control engine may further be configured to dynamically determine the target scent of the space based on the scent of the target scene; and dynamically control the scenthesizer based on the dynamically determined target scent of the space.

According to a second aspect a method for setting a scene in a space is provided. The method comprising: receiving input of a target scene among one or more scenes pre-stored in a database, wherein each scene is represented by a set of parameters comprising a light spectrum having spatial distribution and an intensity having spatial distribution; receiving illumination data from a light sensor, the illumination data pertaining to parameters of a current light profile of the space, the parameters of the current light profile of the space comprises a light spectrum having a spatial distribution and an intensity having spatial distribution; determining a target light setting of the space based on the received illumination data and the set of parameters of the target scene; and controlling one or more of light sources based on the determined target light setting of the space and thereby setting the scene in the space.

The above mentioned features of the control system, when applicable, apply to this second aspect as well. In order to avoid undue repetition, reference is made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief Description of the Drawings

The above and other aspects of the present invention will now be described in more detail, with reference to appended drawings showing embodiments of the invention. The figures should not be considered limiting the invention to the specific embodiment; instead they are used for explaining and understanding the invention.

As illustrated in the figures, the sizes of layers and regions are exaggerated for illustrative purposes and, thus, are provided to illustrate the general structures of embodiments of the present invention. Like reference numerals refer to like elements throughout.
Fig. 1 illustrates a schematic view of a space arranged with a control system.
Fig. 2 illustrates a schematic view of a control system.
Fig. 3 is a schematic view of a control engine of the control system.
Fig. 4 illustrates a schematic view of an alternative control system.
Fig. 5 illustrates a schematic view of an alternative control system.
Fig. 6 illustrates a schematic view of an alternative control system.
Fig. 7 illustrates a schematic view of an alternative control system.
Fig. 8 is a block diagram of a method for setting a scene in the space of Fig. 1.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

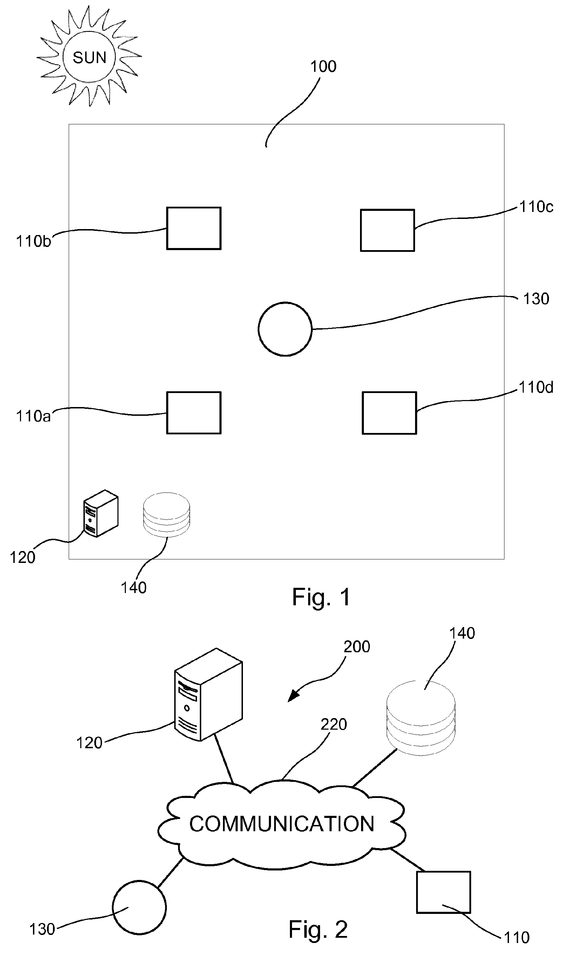

Fig. 1 is a schematic view of a space 100 arranged with a control system (referenced 200 in Fig. 2). The control system 200 comprises one or more light sources 110, a control engine 120, a light sensor 130, and a database 140.

Fig. 2 is a schematic view of the control system 200. In addition to what is discussed above the control system further comprises a data network 220. The one or more light sources 110, the control engine 120, the light sensor 130, and the database 140 are configured to communicate with each other via the data network 220. The data network 220 may be a wired data network 220. The data network 220 may be a wireless data network 220. The data network 220 may be a combined wired and wireless data network 220, wherein part of the communication is made through cables in the wired data network and part of the communication is made wirelessly through the wireless data network. Non limiting examples of data networks are the Internet, an intranet, a local area network and a cellular network. Different types of data networks may be interconnected forming the data network 220. Parts of the data network may be a private data network. Parts of the data network may be a public data network. The private network may be connected to the public network by a network access limiting device (not shown). The network access limiting device may be a firewall installed to protect the private network. The network access limiting device may be a device performing Network Address Translation, NAT.

In the example of a control system of Fig. 1 there are four light sources 110a-d. It is however realized that any number of light sources 110 may be used. The one or more light sources 110 are connected to the control engine 120 and controllable thereby. The one or more of light sources 110 is controllable such that a spatial distribution of a light spectrum and/or a spatial distribution of an intensity of light in the space 100 may be varied. Further, the one or more light sources 110 may be controllable such that a temporal distribution of the light spectrum may be varied. Moreover, the one or more light sources 110 may be controllable such that a temporal distribution of the intensity of light in the space may be varied. In case of the control system comprising a plurality of light sources 110, the different light sources 110 may be controlled in different ways. Alternatively, the different light sources 110 may be controllable in the same way. Examples of features that may be controlled for one or more of the one or more light sources 110 are: a spatial distribution of a light spectrum emitted by the light source 110, a spatial distribution of an intensity of light emitted by the light source 110, a temporal distribution of the light spectrum emitted by the light source 110, a temporal distribution of an intensity of light emitted by the light source 110. Moreover, one or more of the one or more light sources 110 may be set to emit a spatially fixed light spectrum. Different light sources 110 may be set to emit different spatially fixed light spectra. Further, one or more of the one or more light sources 110 may be set to emit a spatially fixed intensity of light. Different light sources may be set to emit different spatially fixed intensities of light. At least some of the one or more light sources 110 may be solid state based light sources, e.g. light based on LED-, OLED-, AMOLED-, Electro Luminescent wire-, or LASER-technology.

In Fig. 1 outside the space 100 is a sun, which represents ambient or surrounding light which may also be included in the control system. The ambient light may be controlled by the control engine 120 by controlling motorized blinds (not shown) or similar equipment. Hence, the control system 200 may also comprises a light source 110 in the form of ambient light. For example, the motorized blinds may be open or shut to regulate the amount of ambient light entering the space 100. The control of the ambient light may be dependent on time of day and/or season. For example, opening the motorized blinds to increase light has no effect in the middle of the night in most areas. Also, the control of the ambient light may be dependent on the room type. For example, it may be an intrusion on a user's personal integrity to automatically open the motorized blinds in a bed room to increase the light, whereas it may be bad for business to close the motorized blinds in a showroom or business place, for example a real estate office. Hence, at least some of the one or more the light sources 110 may also be devices for regulating ambient light.

The one or more light sources 110 may have different properties. Hence, different light sources 110 may be configured to emit light having different spatial distribution of the light spectrum. Different light sources 110 may be configured to emit light having different spatial distribution of the intensity of the light. Different light sources 110 may be configured to emit light having different temporal distribution of the light spectrum. Different light sources 110 may be configured to emit light having different temporal distribution of the intensity of the light. The one or more light sources 110 may be of different types. Hence, some light sources 110 may be controllable for the light direction, amplitude and wavelength while others may be controllable in a more limited manner (only one or a few of the light direction, amplitude and wavelength may be controllable).

The control system comprises one or more light sensors 130. In the example of Fig. 1, the control system comprises one light sensor 130. The light sensor 130 is arranged inside the space 100. It is however realized that light sensors may also be arranged outside the space 100. The light sensor(s) 130 may be arranged on a ceiling of the space 100. The light sensor(s) 130 may be arranged on a wall of the space 100. The light sensor(s) 130 may be arranged on a floor of the space 100. According to other embodiments the light sensor(s) 130 may be worn by a user of the control system. Further, in case of the control system comprising a plurality of light sensors 130 one or more of the light sensors 130 may be worn by users of the control system and one or more of the light sensors 130 may be arranged inside (or possibly also outside) the space 100. The light sensor(s) 130 are arranged to measure illumination data in the space 100. The illumination data comprises parameters pertaining to a spatial distribution of the light spectrum in the space 100 and a spatial distribution of the light intensity in the space 100. The illumination data represents a light profile of the space 100.

According to embodiments the spatial distribution of the light spectrum measured by the light sensor(s) 130 is a current spatial distribution of the light spectrum. According to embodiments the spatial distribution of the light intensity measured by the light sensor(s) 130 is a current spatial distribution of the light intensity. Hence, the illumination data may represents a current light profile of the space 100.

The light sensor(s) 130 is further configured to communicate the measurement to the control engine 120. As a non limiting example, a light sensor 130 may comprise an image sensor. Other non-limiting examples of light sensors are photo sensors, biosensors, gas ionic sensors.

At least some of the one or more light sources 110 may have an integrated light sensor 130. The integrated light sensor 130 may be configured to sense properties of the actual transmitted light from the light source 110. The integrated light sensor 130 may alternatively or in combination be configured to sense properties of the light in the space 100.

The database 140 comprises entries representing one or more scenes. Each scene is represented by a set of parameters comprising a light spectrum having spatial distribution and a light intensity having spatial distribution. The set of parameters for a scene may further comprise a temporal distribution of the light spectrum. The set of parameters for a scene may further comprise a temporal distribution of the light intensity. As will be discussed below the set of parameters for a scene may comprise even further parameters. Non-limiting examples of scenes are a beach with bright sand, dark blue water and light blue sky, an open landscape with green grass and light blue sky, and inside a forest with a glade with clear sunlight. The database 140 may be software and/or hardware implemented. The database 140 may be located in one specific device. Alternatively, the database 140 may be distributed among a plurality of devices.

The set of parameters representing a scene may further comprise geopositioning data of the scene. Non-limiting examples of geopositioning data are latitude, longitude, altitude and compass directions.

The set of parameters representing a scene may further comprise other kind of data. Non limiting examples of data forming part of the set of parameters representing a scene are: temperature data, air flow data, sound data and scent data.

At least some of the set of parameters representing a scene may be derived from an image or a plurality of images of the scene. A scene may be captured by means of a light measurement using an image sensor of a digital camera. The digital camera may be a dedicated digital camera or form part of an electronic device in the form of a mobile phone, a tablet, a computer, a smart watch etc. Alternatively or in combination, a scene may be generated in a image generating device such as a computer running image rendering software. Hence, spatial and/or temporal distribution of the light spectrum and/or light intensity of a scene may be derived from image data from an image of a plurality of images of the scene. Further, the geopositioning data of the scene may be derived from metadata of an image or a plurality of images of the scene.

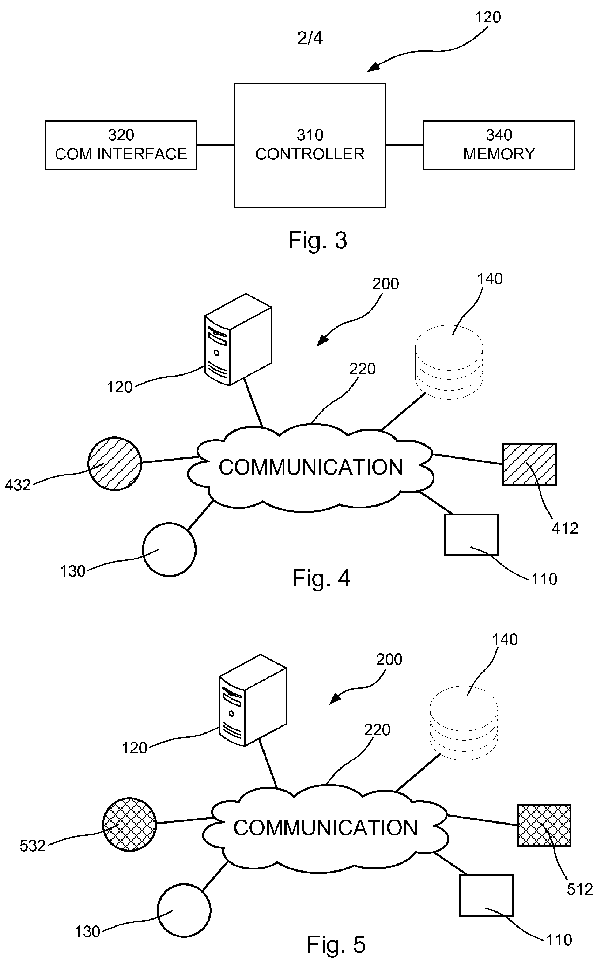

Fig. 3 is a schematic view of the control engine 120. The control engine 120 comprises a controller 310, a communication interface 320 and a memory 340. The control engine 120 may be implemented in a dedicated device such as a computer server. Alternatively, the control engine 120 may be distributed among a plurality of devices together forming the control engine 120 in the form of a distributed control engine 120. Hence, the control engine 120 may be implemented on a server in a home or on a central server or as part of a cloud service.

Clients (not shown) may register to the control system 200 via the control engine 120 to become users of the control system 200. Registered clients may then be used to input control signals to the control system 200. Clients are electronic devices being configured to establish a communication with the control engine 120 via the data network 220. Non-limiting examples of electronic devices used as clients are a mobile phone, a tablet, a computer, a smart watch or any other electronic device being set up to being able to provide the control engine 120 with input signals. An example of such an input signal to the control engine 120 is a signal indicating a scene among the one or more scenes in the database 140. The client(s) may have individual application software installed thereon. The application software is configured to communicate with the control engine 120. The client(s) may further be used for storing and bridging of data transfer from and to the database 140. One or more of the clients may be one or more of the plurality of devices together forming the distributed control engine 120.

The controller 310 may be software and/or hardware implemented. For example, the controller 310 may be implemented by a processor running executable computer program instructions. The processor may be a general-purpose or special-purpose processor. The executable computer program instructions may be stored on the memory 340. Hence, the processor is configured to read instructions from the memory 340 and execute these instructions to control the operation of the control system 200.

The memory 340 may be implemented using any commonly known technology for computer-readable memories, such as ROM, RAM, SRAM, DRAM, CMOS, FLASH, DDR, SDRAM or some other memory technology. The memory 340 may also be arranged to store information be processed by the controller 310. The memory 340 may be configured to store at least parts of the database 140.

The communication interface 320 is adapted to allow the control engine 120 to communicate with the one or more light sources 110, the light sensor(s) 130, the database 140 and the client(s). The communication interface 320 may be configured to communicate with other electronic devices as well. Non-limiting examples are different type of sensors and controller for e.g. sensing and controlling temperature, air flow, sound and scent. These other kind of sensors and controller will be discussed in more detail below. The communication interface 320 may be a radio frequency interface which is adapted to communicate through a radio frequency band through the use of different radio frequency technologies. Examples of such technologies are Wi-Fi, Bluetooth, W-CDMA, GSM, UTRAN, LTE and NMT to name a few. The communication interface 320 may additionally or alternatively comprise a wired interface.

The control engine 120 is configured to receive input of a target scene among the one or more scenes. The input may be part of the input signal from the client. The target scene is a scene, among the one or more scenes in the database 140, selected by the client as the scene to be set in the space 100. The goal is to recreate the target scene within the space 100. Different target scenes will become desirable for different clients at different point of time.

The control engine 120 is further configured to receive illumination data from the light sensor(s) 130. As mentioned above, the illumination data pertains to parameters of a current light profile of the space 100. The parameters of the current light profile of the space comprise a light spectrum having a spatial distribution and an intensity having spatial distribution.

From the from the light sensor(s) 130 received current light profile and the set of parameters of the target scene the control engine 120 is further configured to determine a target light setting of the space 100. The target light setting of the space 100 is a desired setting of the one or more light sources 110 for recreating the target scene in the space 100. The target light setting of the space 100 will differ for different spaces 100. The target light setting of the space 100 depend on each space 100 and its characteristics including lighting characteristics and the characteristics of the one or more light sources in the space 100.

The control engine 120 is further configured to control the one or more of light sources 110 based on the determined target light setting of the space 100. Hence, the target scene may be recreated in the space 100 by controlling the one or more of light sources 110. When a target scene has been chosen by a client, the particular target scene will appear in the space 100, at least to the best possible match with the one or more light sources 110 of the space 100 and the space 100 architecture, material and construction with different reflections and colors, taken into account.

The control engine 120 may further be configured to continuously update the from the light sensor(s) 130 received illumination data; dynamically determine the target light setting of the space 100 based on the continuously updated illumination data and the set of parameters of the target scene; and dynamically control the one or more light sources 110 based on the dynamically determined target light setting of the space 100. Hence, the control of the one or more light sources 110 may be dynamic and vary continuously depending on changing light conditions within the space 100.

As illustrated in Fig. 4 the control system 200 may further comprise a temperature sensor 432 and a temperature controller 412. The temperature sensor 432 is configured to measure a temperature of the space 100. The temperature sensor 432 is configured to directly and indirectly determining a temperature in the space 100. Temperature sensors are well known to the person skilled in the art and will not be discussed further in this disclosure. The control system 200 may comprise one or more temperature sensors 432. The temperature controller 412 is configured to control the temperature in the space 100. Non-limiting examples of temperature controllers 412 are heaters; coolers; heat exchangers; air conditioners; radiators; means for opening/closing a vent, a door or a window; and blinds blocking or allowing heat from/to enter the space 100. The control system 200 may comprise one or more temperature controllers 412.

The set of parameters of one or more of the one or more scenes in the database 140 may further comprises a temperature. The temperature of a scene may be static. The temperature of a scene may be dynamic having a temporal distribution.

The control engine 120 may further be configured to receive temperature data from the temperature sensor 432. The temperature data pertains directly or indirectly to the temperature of the space 100.

The control engine 120 may further be configured to determine a target temperature setting of the space 100 based on the, from the temperature sensor 432, received temperature data and the temperature of the target scene. The target temperature setting of the space 100 is a desired temperature setting of the temperature controller(s) 412 for recreating the target scene in the space 100. The target temperature setting of the space 100 will differ for different spaces 100. The target temperature setting of the space 100 depend on each space 100 and its characteristics including e.g. insulation and volume, and the characteristics of the temperature controller(s) 412.

The control engine 120 may further be configured to control the temperature controller(s) 412 based on the determined target temperature setting of the space 100. Hence, the target scene may be recreated in the space 100 by controlling the temperature controller(s) 412. When a target scene has been chosen by a client, the particular target scene will appear in the space 100, at least to the best possible match with the temperature controller(s) 412 of the space 100 and the space 100 architecture, material and construction taken into account.

The control engine 120 may further be configured to continuously update the, from the temperature sensor(s) 432, received temperature data; dynamically determine the target temperature setting of the space 100 based on the continuously updated temperature data and the temperature of the target scene; and dynamically control the temperature controller(s) 412 based on the dynamically determined target temperature setting of the space 100. Hence, the control of the temperature controller(s) 412 may be dynamic and vary continuously depending on changing temperature conditions within the space 100.

As illustrated in Fig. 5 the control system 200 may further comprise an air flow e sensor 532 and an air flow controller 512. Air flow sensors are well known to the person skilled in the art and will not be discussed further in this disclosure. The control system 200 may comprise one or more air flow sensors 532. The air flow controller 512 is configured to control the air flow in the space 100. Non-limiting examples of air flow controllers 412 are fans; air conditioners; mechanical ventilation systems; and means for opening/closing a vent, a door or a window. The control system 200 may comprise one or more air flow controllers 512.

The set of parameters of one or more of the one or more scenes in the database 140 may further comprises an air flow. The air flow of a scene may be static. The air flow of a scene may be dynamic having a temporal distribution.

The control engine 120 may further be configured to receive air flow data from the air flow sensor(s) 532. The air flow data pertains directly or indirectly to the air flow of the space 100.

The control engine 120 may further be configured to determine a target air flow setting of the space 100 based on the, from the air flow sensor(s) 532, received air flow data and the air flow of the target scene. The target air flow setting of the space 100 is a desired air flow setting of the air flow controller(s) 512 for recreating the target scene in the space 100. The target air flow setting of the space 100 will differ for different spaces 100. The target temperature setting of the space 100 depend on each space 100 and its characteristics including e.g. insulation, volume and air tightness, and the characteristics of the air flow controller(s) 512.

The control engine 120 may further be configured to control the air flow controller(s) 512 based on the determined target air flow setting of the space 100. Hence, the target scene may be recreated in the space 100 by controlling the air flow controller(s) 512. When a target scene has been chosen by a client, the particular target scene will appear in the space 100, at least to the best possible match with the air flow controller(s) 512 of the space 100 and the space 100 architecture, material and construction taken into account.

The control engine 120 may further be configured to continuously update the, from the air flow sensor(s) 532, received air flow data; dynamically determine the target air flow setting of the space 100 based on the continuously updated air flow data and the air flow of the target scene; and dynamically control the air flow controller(s) 512 based on the dynamically determined target air flow setting of the space 100. Hence, the control of the air flow controller(s) 512 may be dynamic and vary continuously depending on changing air flow conditions within the space 100.

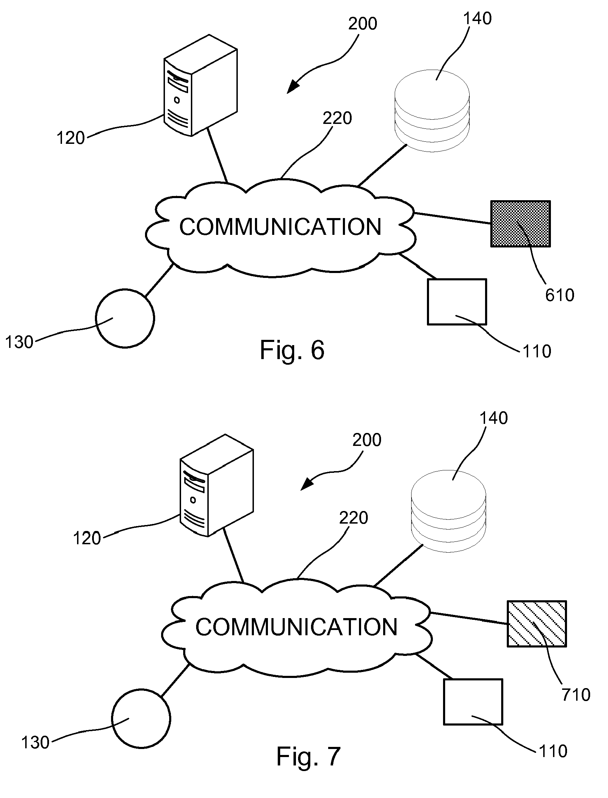

As illustrated in Fig. 6 the control system 200 may further comprise a loudspeaker 610. The loudspeaker 610 is configured to emit a sound pattern in the space 100. The sound pattern may be any kind of sound. The control system 20 may comprise one or more loudspeakers 610.

The set of parameters of one or more of the one or more scenes in the database 140 may further comprise a sound pattern. The sound pattern of a scene may be dynamic having a temporal distribution.

The control engine 120 may further be configured to determine a target sound pattern of the space 100 based on the sound pattern of the target scene.

The control engine 120 may further be configured to control the loudspeaker(s) 610 based on the determined target sound pattern of the space 100. Hence, the target scene may be recreated in the space 100 by controlling the loudspeaker(s) 610. When a target scene has been chosen by a client, the particular target scene will appear in the space 100.

The control engine 120 may further be configured to dynamically determine the target sound pattern of the space 100 based on the sound pattern of the target scene; and dynamically control the loudspeaker(s) 610 based on the dynamically determined target sound pattern of the space 100. Hence, the control of the loudspeaker(s) 610 may be dynamic and vary continuously depending on the temporally distributed target sound pattern.

As illustrated in Fig. 7 the control system 200 may further comprise a scenthesizer 710. The scenthesizer 710 is a device configured to emit a scent in the space 100. The control system 20 may comprise one or more scenthesizers 710.

The set of parameters of one or more of the one or more scenes in the database 140 may further comprise a scent. The scent of a scene may be static. The scent of a scene may be dynamic having a temporal distribution.

The control engine 120 may further be configured to determine a target scent of the space 100 based on the scent of the target scene.

The control engine 120 may further be configured to control the scenthesizer(s) 710 based on the determined target scent of the space 100. Hence, the target scene may be recreated in the space 100 by controlling the scenthesizer(s) 710. When a target scene has been chosen by a client, the particular target scene will appear in the space 100.

The control engine 120 may further be configured to dynamically determine the target scent of the space 100 based on the scent of the target scene; and dynamically control the scenthesizer(s) 710 based on the dynamically determined target scent of the space 100. Hence, the control of the scenthesizer(s) 610 may be dynamic and vary continuously depending on the temporally distributed target scent.

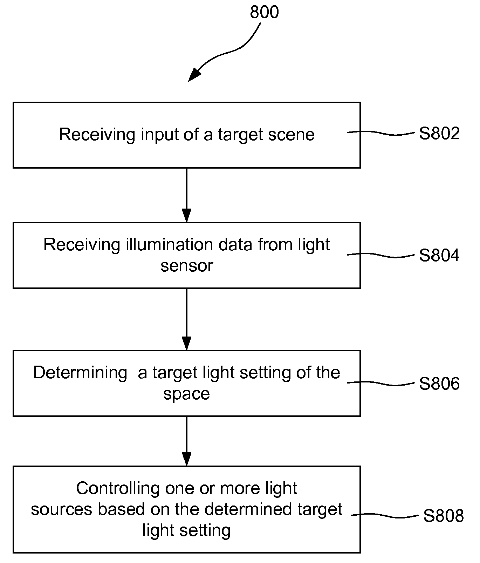

In Fig. 8 a block diagram of a method 800 for setting a scene in the space 100 is illustrated. The method comprises the acts according to the following. Receiving S802 input of a target scene. The input may be generated at a client. The target scene is chosen among one or more scenes pre-stored in the database 140. Each scene is represented by a set of parameters comprising a light spectrum having spatial distribution and an intensity having spatial distribution. According to the above the set of parameters of each scene may comprise other data. Receiving S804 illumination data from the light sensor 130. The illumination data pertaining to parameters of a current light profile of the space 100. The parameters of the current light profile of the space 100 comprise a light spectrum having a spatial distribution and an intensity having spatial distribution. Determining S806 a target light setting of the space 100. The target light setting of the space 100 is based on the received illumination data and the set of parameters of the target scene. Controlling S808 the one or more light sources 110 based on the determined target light setting of the space; thereby setting the scene in the space 100.

The act of receiving S804 illumination data from the light sensor 130 may comprise to continuously update the, from the light sensor 130, received illumination data. The act determining S806 the target light setting of the space 100 may be based on the continuously updated illumination data and the set of parameters of the target scene. The act of controlling S808 the one or more light sources 110 may be based on the dynamically determined target light setting of the space 100.

The person skilled in the art realizes that the present invention by no means is limited to the preferred embodiments described above. On the contrary, many modifications and variations are possible within the scope of the appended claims.

For example, the control system may be used as forming part of a light therapy system.

Furthermore, the control system may be used as forming part of a lighting system within an animal housing for enhancing the well being of the animal and even for controlling the behavior of the animals in the animal housing.

Moreover, the control system may be any combination of the embodiments disclosed in connection with Figs 2, 4, 5, 6, and 7. According to embodiments the control system may also be a control system not including a light sensor and a light source.

Additionally, variations to the disclosed embodiments can be understood and effected by the skilled person in practicing the claimed invention, from a study of the drawings, the disclosure, and the appended claims.

## Claims

1. A control system comprising:
a control engine (120);
a light sensor (130) arranged in a space (100);
one or more light sources (110) arranged in the space; and
a database (140) comprising one or more scenes, wherein each scene is represented by a set of parameters comprising a light spectrum having spatial distribution and an intensity having spatial distribution;
wherein the control engine is configured to:
receive input of a target scene among the one or more scenes;
receive illumination data from the light sensor, the illumination data pertaining to parameters of a current light profile of the space, the parameters of the current light profile of the space comprises a light spectrum having a spatial distribution and an intensity having spatial distribution;
determine a target light setting of the space based on the received illumination data and the set of parameters of the target scene;
control the one or more of light sources based on the determined target light setting of the space.

2. The control system according to claim 1, wherein the light spectrum of each scene has a temporal distribution.

3. The control system according to claim 1 or 2, wherein the intensity of each scene has a temporal distribution.

4. The control system according to any one of claims 1-3, wherein the control engine is further configured to:
continuously update the from the light sensor received illumination data;
dynamically determine the target light setting of the space based on the continuously updated illumination data and the set of parameters of the target scene; and
dynamically control the one or more light sources based on the dynamically determined target light setting of the space.

5. The control system according to any one of claims 1-4, wherein the set of parameters representing a scene is derived from an image or a plurality of images of the scene.

6. The control system according to any one of claims 1-5, wherein the set of parameters of each scene further comprises geopositioning data of the scene and/or wherein the illumination data comprises geopositioning data of the space.

7. The control system according to any one of claims 1-7, further comprising:
a temperature sensor (432) configured to measure a temperature in the space; and
a temperature controller (412) configured to control the temperature of the space;
wherein the set of parameters of each scene further comprises a temperature,
wherein the control engine is further configured to:
receive temperature data from the temperature sensor;
determine a target temperature setting of the space based on the received temperature data and the set of parameters of the target scene; and
control the temperature controller based on the determined target temperature setting of the space.

8. The control system according to claim 7, wherein the control engine is further configured to:
continuously update the from the temperature sensor received temperature data;
dynamically determine the target temperature setting of the space based on the continuously updated temperature data and the set of parameters of the target scene; and
dynamically control the temperature controller based on the dynamically determined target temperature setting of the space.

9. The control system according to any one of claims 1-8 further comprising:
an air flow sensor (532) configured to measure an airflow in the space; and
an air flow controller (512) configured to control an air flow of the space;
wherein the set of parameters of each scene further comprises an air flow,
wherein the control engine is further configured to:
receive air flow data from the air flow sensor;
determine a target air flow setting of the space based on the received air flow data and the set of parameters of the target scene; and
control the air flow controller based on the determined target air flow setting of the space.

10. The control system according to claim 9, wherein the control engine is further configured to:
continuously update the from the air flow sensor received air flow data;
dynamically determine the target air flow setting of the space based on the continuously updated air flow data and the set of parameters of the target scene; and
dynamically control the air flow controller based on the dynamically determined target air flow setting of the space.

11. The control system according to any one of claims 1-10, further comprising:
a loudspeaker configured to emit a sound pattern in the space;
wherein the set of parameters of each scene further comprises a sound pattern,
wherein the control engine is further configured to:
determine a target sound pattern of the space based on the sound pattern of the target scene; and
control the loudspeaker based on the determined target sound pattern of the space.

12. The control system according to claim 11, wherein the sound pattern of each scene has a temporal distribution, and wherein the control engine is further configured to:
dynamically determine the target sound pattern of the space based on the sound pattern of the target scene; and
dynamically control the loudspeaker based on the dynamically determined target sound pattern of the space.

13. The control system according to any one of claims 1-12, further comprising:
a scenthesizer configured to emit a scent in the space;
wherein the set of parameters of each scene further comprises a scent,
wherein the control engine is further configured to:
determine a target scent of the space based on the scent of the target scene; and
control the scenthesizer based on the determined target scent of the space.

14. The control system according to claim 13, wherein the scent of each scene has a temporal distribution, and wherein the control engine is further configured to:
dynamically determine the target scent of the space based on the scent of the target scene; and
dynamically control the scenthesizer based on the dynamically determined target scent of the space.

15. A method for setting a scene in a space (100), the method comprising:
receiving input of a target scene among one or more scenes pre-stored in a database (140), wherein each scene is represented by a set of parameters comprising a light spectrum having spatial distribution and an intensity having spatial distribution;
receiving illumination data from a light sensor (130), the illumination data pertaining to parameters of a current light profile of the space, the parameters of the current light profile of the space comprises a light spectrum having a spatial distribution and an intensity having spatial distribution;
determining a target light setting of the space based on the received illumination data and the set of parameters of the target scene; and
controlling one or more of light sources based on the determined target light setting of the space and thereby setting the scene in the space.
